# EUROPÄISCHE PATENTSCHRIFT

(11) **EP 1 230 187 B1**
(45) Veröffentlichungstag und Bekanntmachung des Hinweises auf die Patenterteilung: **29.09.2004**
(21) Anmeldenummer: 00972798.3
(22) Anmeldetag: 18.10.2000
(51) Int. Cl.: C03C 17/30, C09D 183/08

(54) **BESCHICHTUNGSZUSAMMENSETZUNG AUF BASIS ORGANISCH MODIFIZIERTER ANORGANISCHER KONDENSATE**
COATING COMPOSITION, BASED ON ORGANICALLY MODIFIED INORGANIC CONDENSATES
COMPOSITION DE REVETEMENT A BASE DE CONDENSATS INORGANIQUES MODIFIES ORGANIQUEMENT

(30) Priorität: 19.10.1999 DE 19950383
(43) Veröffentlichungstag der Anmeldung: 14.08.2002
(73) Patentinhaber: INSTITUT FÜR NEUE MATERIALIEN GEM. GMBH, 66123 Saarbrücken (DE)
(72) Erfinder: GIER, Andreas, 49326 Melle (DE); MENNIG, Martin, 66287 Quierschied (DE); SCHMIDT, Helmut, 66130 Saarbrücken-Güdingen (DE)
(74) Vertreter: Barz, Peter
(86) Internationale Anmeldenummer: PCT/EP2000/010260
(87) Internationale Veröffentlichungsnummer: WO 2001/028948

(56) Entgegenhaltungen:
- EP-A- 0 471 301
- EP-A- 0 482 480
- WO-A-94/29390
- WO-A-98/45216
- WO-A-99/37721
- DATABASE WPI Section Ch, Week 199804 Derwent Publications Ltd., London, GB; Class A17, AN 1998-037181 XP002159301 & JP 09 291251 A (TEIJIN LTD), 11. November 1997 (1997-11-11)

## Beschreibung

Die vorliegende Erfindung betrifft eine Beschichtungszusammensetzung, welche organisch modifizierte anorganische Kondensate auf Basis von hydrolysierbaren Silanen mit mindestens einer Epoxidgruppe umfaßt, Verfahren zur Herstellung der Beschichtungszusammensetzung, deren Verwendung für die Beschichtung von Substraten, insbesondere Glas, und damit beschichtete Substrate.

Die Bruchfestigkeit von Glas wird durch Mikrorisse in der Glasoberfläche drastisch gesenkt, so daß die praktisch verfügbare Festigkeit um mehrere Größenordnungen unter der theoretischen Festigkeit liegt. Diese Mikrorisse entstehen durch mechanischen, thermischen und/oder chemischen Angriff auf die Glasoberfläche während der Herstellung und Verarbeitung, aber auch während des Gebrauchs.

Es ist bekannt, die Bruchfestigkeit geschädigter Gläser durch Beschichtung wieder zu erhöhen, indem die Mikrorisse mit einem transparenten, glasartigen Sol-Gel-Material gefüllt werden und/oder über den Beschichtungsprozeß eine Druckspannungszone im oberflächennahen Bereich des Glases erzeugt wird. Außerdem sind Arbeiten bekannt, bei denen glaskeramische, metalloxidische oder auch keramische Schichten zur Festigkeitserhöhung verwendet werden. Diese Schichten sind jedoch in der Regel nicht glasartig transparent, was ihren Einsatz limitiert.

Außerdem hat sich erwiesen, daß diese glasartigen oder keramikartigen Schichten zwar die Bruchfestigkeit erhöhen können, das Glas aber nicht vor erneuter Beschädigung schützen können, da sie ein analoges Sprödbruchverhalten wie die darunterliegende Glasoberfläche besitzen, mit der sie über Sauerstoffbrücken chemisch fest verbunden sind. Dadurch werden bei äußerem Angriff entsprechende Schäden in der Beschichtung erzeugt und können sich in das Glas fortpflanzen. Dies gilt auch für aufgetragene Schichten aus einem SiO₂-Sol-Gel, unabhängig davon, ob dünne oder dicke Schichten im µm-Bereich eingesetzt werden.

Ein weit verbreiteter Schutz für Glas hinsichtlich der Festigkeitseigenschaften ist die sogenannte Kaltendvergütung mit Wachsen, Fettsäuren oder Fettsäureestern, die z.B. in der US-A-4232065 beschrieben ist. Weitere Behandlungsmöglichkeiten sind der Auftrag von dünnen Polymerschichten mit Schichtdicken von etwa 8 µm, wie in der WO 93/6054 beschrieben, oder der Einsatz von polysiloxanhaltigen Wachs-, Fettsäure- oder Fettsäureesterschichten, die in der WO 98/45217 offenbart sind.

Um sowohl den eingangs erwähnten raschen Festigkeitsabfall zu verzögern und auch einen Schutz vor mechanischer Beschädigung sowie ausreichende Gleiteigenschaften zu erhalten, wurde in der WO 97/41966 eine Beschichtung des Glases mit organischen Polymerschichten vorgeschlagen. Dazu werden, z.B. über einen Pulverlack, Polymerschichten mit einer Dicke von 80 - 100 µm aufgetragen. Ein Schutz vor Spannungsrißkorrosion ist wegen der hohen Wasserpermeabilität jedoch schwierig. Wasser diffundiert zur Grenzfläche Polymer-Glas und verursacht dort wegen der schwachen Anbindung des Polymers die bekannten festigkeitsemiedrigenden Korrosionserscheinungen. Ein weiterer schwerwiegender Nachteil beim Einsatz von dicken Polymerschichten besteht darin, daß zur Rückgewinnung des Glases ein sehr aufwendiger Trennprozeß von Glas und Polymer notwendig ist, um das Redoxgleichgewicht im Glasschmelzofen nicht zu stören. So werden bei polymerbeschichteten Flaschen die Scherben bis auf eine Korngröße im Bereich der Polymerschichtdicke aufgemahlen (50 µm - 100 µm) und der Polymeranteil wird durch Aufschütteln abgetrennt.

WO-A-99/37721 beschreibt eine Polykondensat-Beschichtung, die ein hydrolysierbares Aminosilan und ein Epoxysilan enthält. Die eingesetzten Amino- und Epoxy-Vorstufen können teilweise vorhydrolysiert sein. Die Beschichtungszusammensetzung soll die Kratzfestigkeit von Substraten verbessern, insbesondere von Kunststoffsubstraten.

Der Erfindung lag die Aufgabe zugrunde, eine Beschichtung mit hoher festigkeitserhaltender Wirkung bereitzustellen, die die Recyclingfähigkeit von Glas nicht beeinträchtigt. Außerdem bestand die Anforderung, einerseits eine gute Haftung zum Glas zu erreichen, andererseits die Sprödigkeit keramischer Werkstoffe zu vermeiden und zudem noch eine genügende Abriebfestigkeit zu erzielen.

Die erfindungsgemäße Aufgabe mit den vielseitigen gegenläufigen Anforderungen konnte überraschenderweise durch eine Beschichtungszusammensetzung gelöst werden, die ein Polykondensat umfaßt, das erhältlich ist durch Umsetzen von
a) einem Vorhydrolysat auf Basis von mindestens einem hydrolysierbaren Silan mit mindestens einem nicht hydrolysierbaren Substituenten, wobei das Silan an mindestens einem nicht hydrolysierbaren Substituenten eine oder mehrere Epoxidgruppen aufweist;
b) mindestens einer Aminkomponente, ausgewählt aus (1) Vorhydrolysaten auf Basis von mindestens einem hydrolysierbaren Silan mit mindestens einem nicht hydrolysierbaren Substituenten, wobei das Silan an mindestens einem nicht hydrolysierbaren Substituenten eine oder mehrere Aminogruppen aufweist und (2) Aminverbindungen mit mindestens zwei Aminogruppen, und
c) einem Aminoschutzgruppen-Reagenz.

Erfindungsgemäß werden Beschichtungszusammensetzungen erhalten, mit denen man die Bruchfestigkeit von Glas, insbesondere von beschädigtem Glas, erhöhen kann. Gleichzeitig werden hochabriebbeständige Beschichtungen erhalten, die zudem gut auf Glas haften. Auch hinsichtlich der Rückgewinnung des Glases treten keine Probleme auf.

Das als Komponente a) verwendete Vorhydrolysat basiert auf mindestens einem hydrolysierbaren Silan mit mindestens einem nicht hydrolysierbaren Substituenten, wobei das Silan an mindestens einem nicht hydrolysierbaren Substituenten eine Epoxidgruppe aufweist. Bei diesem Silan handelt es sich um eine Siliciumverbindung, die über 1 bis 3, bevorzugt 2 oder 3, besonders bevorzugt 3, hydrolysierbare Reste und 1, 2 oder 3, vorzugsweise 1 oder 2, besonders bevorzugt einen, nicht hydrolysierbare Reste verfügt. Mindestens einer der nicht hydrolysierbaren Reste verfügt über mindestens eine Epoxidgruppe.

Beispiele für nicht hydrolysierbare Reste R mit Epoxidgruppe sind insbesondere solche, die über eine Glycidyl- bzw. Glycidyloxygruppe verfügen. Diese können über eine Alkylengruppe, z. B. ein C₁-C₆-Alkylen, wie Methylen, Ethylen, Propylen, Butylen, mit dem Siliciumatom verknüpft sein. Konkrete Beispiele für erfindungsgemäß einsetzbare hydrolysierbare Silane können z.B. der EP-A-195493 entnommen werden. Beispiele für nicht hydrolysierbare Reste ohne Epoxidgruppen sind die nachstehend für die allgemeine Formel (III) aufgeführten Beispiele für den Rest R". Beispiele für hydrolysierbare Reste sind die nachstehend für die allgemeine Formel (I) aufgeführten Beispiele für den Rest X. Erfindungsgemäß besonders bevorzugte hydrolysierbare Silane mit Epoxidgruppe sind diejenigen der allgemeinen Formel (I):

X₃SiR (I)

in welcher die Reste X, gleich oder verschieden voneinander (vorzugsweise identisch) für eine hydrolysierbare Gruppe stehen, und z. B. ein Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und Butoxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Alkylcarbonyl (z.B. Acetyl) sind, und R eine nicht hydrolysierbare Gruppe mit mindestens einer Epoxidgruppe ist, z. B. eine aliphatische, cycloaliphatische oder aromatische Gruppe, insbesondere eine Alkylengruppe, z. B. ein C₁-C₆-Alkylen, wie Methylen, Ethylen, Propylen und Butylen mit mindestens einer Epoxidgruppe. Der Rest X ist vorzugsweise C₁₋₄-Alkoxy und besonders bevorzugt Methoxy und Ethoxy, und R ist bevorzugt ein Glycidyloxy-(C₁₋₆)-alkylen-Rest.

Wegen der leichten Zugänglichkeit wird γ-Glycidyloxypropyltrimethoxysilan (im folgenden als GPTS abgekürzt) besonders bevorzugt eingesetzt. Weitere Beispiele sind Glycidyloxypropyltriethoxysilan, Glycidyloxypropylmethyldiethoxsilan und Glycidyloxypropylmethyldimethoxysilan.

Bei der Komponente b) handelt es sich um mindestens eine Aminkomponente, die ausgewählt ist aus (1) Vorhydrolysaten auf Basis von mindestens einem hydrolysierbaren Silan mit mindestens einem nicht hydrolysierbaren Substituenten, wobei das Silan an mindestens einem nicht hydrolysierbaren Substituenten eine Aminogruppe aufweist und (2) Aminverbindungen mit mindestens zwei Aminogruppen. Die Komponenten (1) und (2) können allein oder in Mischung eingesetzt werden. Bevorzugt besteht die Komponente b) zumindest zum Teil aus der Komponente (1), z.B sind mindestens 20 Mol.-% oder mindestens 40 Mol.-%, bevorzugt mindestens 60 Mol.-% der Komponente b) die Komponente (1). Besonders bevorzugt besteht die Komponente b) nur aus der Komponente (1).

Bei der Komponente (1) handelt es sich um Vorhydrolysate auf Basis von mindestens einem hydrolysierbaren Silan mit mindestens einem nicht hydrolysierbaren Substituenten, wobei das Silan an mindestens einem nicht hydrolysierbaren Substituenten eine oder mehrere Aminogruppen aufweist. Das Silan weist insbesondere 1 bis 3, bevorzugt 2 oder 3, besonders bevorzugt 3, hydrolysierbare Reste und 1, 2 oder 3, vorzugsweise 1 oder 2, besonders bevorzugt einen, nicht hydrolysierbare Reste auf. Mindestens einer der nicht hydrolysierbaren Reste verfügt über mindestens eine Aminogruppe.

Beispiele für nicht hydrolysierbare Reste mit mindestens einer Aminogruppe sind nachstehend aufgeführt. Beispiele für nicht hydrolysierbare Reste ohne Aminogruppen sind die nachstehend für die allgemeine Formel (III) aufgeführten Beispiele für den Rest R". Beispiele für hydrolysierbare Reste sind die vorstehend für die allgemeine Formel (I) aufgeführten Beispiele für den Rest X.

Bevorzugte Aminosilane sind solche der allgemeinen Formel (II):

X₃SiR' (II)

worin die Reste X wie im Falle der allgemeinen Formel (I) oben definiert sind, und R' für einen nicht hydrolysierbaren, an Si gebundenen Rest steht, der mindestens eine primäre, sekundäre oder tertiäre Aminogruppe umfaßt. Der Rest R' kann ein, zwei oder mehr Aminogruppen umfassen. R' kann z.B. -Z-NR¹R² sein, worin Z ein Alkylen, z. B. ein C₁-C₆-Alkylen, wie Methylen, Ethylen, Propylen und Butylen, ein Arylen, z.B. Phenylen, oder ein von Alkylaryl oder Aralkyl abgeleiteter Rest ist und R¹ und R² gleich oder verschieden sind und Wasserstoff, Alkyl, z. B. C₁-C₆-Alkyl, wie Methyl, Ethyl, Propyl und Butyl, Aryl, Alkylaryl oder Aralkyl sind. R¹ und R² können auch miteinander verknüpft sein, so daß ein stickstoffhaltiger Ring gebildet wird. Gegebenenfalls haben Z, R¹ und R² einen oder mehrere übliche organische Substituenten. R¹ und/oder R² können auch die Gruppe -Z'-NR'¹R'² sein, worin Z' wie Z sowie R'¹ und R'² wie R¹ und R² definiert sind. Z' und Z sowie R'¹, R'² und R¹, R² können im selben Rest jeweils gleich oder verschieden sein. Auf diese Weise werden Reste R' mit zwei, drei oder mehr Aminogruppen erhalten.

Konkrete Beispiele für derartige Silane sind 3-Aminopropyltrimethoxysilan, 3-Aminopropyltriethoxysilan, N-(2-Aminoethyl)-3-aminopropyltrimethoxysilan, N-[N'-(2'-Amino-ethyl)-2-amino-ethyl]-3-aminopropyltrimethoxysilan, N-[3-(Triethoxysilyl)-propyl]-4,5-dihydro-imidazol und [N-(2-Aminoethyl)-3-aminopropyl]-methyl-diethoxysilan.

Bei der Komponente (2) handelt es sich um Aminverbindungen mit mindestens zwei Aminogruppen. Die Aminogruppen können insbesondere primäre oder sekundäre Aminverbindungen sein. Derartige Stickstoffverbindungen können z.B. ausgewählt werden aus aliphatischen Di- Tri- oder Tetraaminen mit 2 bis 8 Kohlenstoffatomen, N-Heterocyclen, Aminogruppen-haltigen Phenolen, polycyclischen oder aromatischen Aminen. Konkrete Beispiele sind Ethylendiamin, Diethylentriamin, Triethylentetramin, 1,6-Diaminohexan, 1,6-Bis(dimethylamino)hexan, Tetramethylethylendiamin, N,N,N',N",N"-Pentamethyldiethylentriamin, 1,4-Diazabicyclo[2.2.2]octan, Cyclohexan-1,2-diamin, 2-(Aminomethyl)-3,3,5-trimethylcyclopentylamin, 4,4'-Diaminocyclohexylmethan, 2-Methylimidazol, 2-Phenylimidazol, 1,3-Bis(aminomethyl)cyclohexan, Bis(4-amino-3-methylcyclohexyl)methan, 1,8-Diamino-p-menthan, 3-(Aminoethyl)-3,3,5-trimethylcyclohexylamin (Isophorondiamin), Piperazin, Piperidin, Urotropin, Bis(4-aminophenyl)methan und Bis(4-aminophenyl)sulfon. Bevorzugte Beispiele sind Diethylentriamin, Triethylentetramin oder Isophorondiamin.

Bei dem Aminoschutzgruppen-Reagenz handelt es sich um eine Verbindung mit einer funktionellen Gruppe, die mit einer Aminogruppe umgesetzt werden kann. Insbesondere besitzt die funktionelle Gruppe des Aminoschutzgruppen-Reagenzes eine höhere Reaktivität gegenüber der Aminogruppe als eine Epoxidgruppe. Daher reagieren die in der Mischung noch enthaltenen freien Aminogruppen bevorzugt mit dem Aminoschutzgruppen-Reagenz. Es bildet sich dann ein derivatisiertes Amin, das für die Vernetzung nicht mehr zur Verfügung steht. Es kann sich dabei z.B. um Säurehalogenide oder Säureanhydride, z. B. Carbonsäureanhydride, Carbonsäurehalogenide oder Sulfonsäurehalogenide handeln. Bei den Halogeniden kann es sich um das Säurechlorid, -bromid oder - iodid handeln, wobei die Säurechloride bevorzugt sind. Es kann sich um Anhydride oder Halogenide von geradkettigen oder verzweigten aliphatischen, cycloaliphatischen oder aromatischen Carbonsäuren handeln, z.B. Anhydride und Halogenide von C₁-C₈-Alkylcarbonsäuren, wie Essigsäure, Propionsäure, Buttersäure und Malonsäure, C₁-C₈-Alkenylcarbonsäuren, wie Maleinsäure, oder C₆-C₂₅-Arylcarbonsäuren, wie Phthalsäure. Konkrete Beispiele sind Propionsäurechlorid, Acetylchlorid, Sulfonsäurechlorid, Maleinsäureanhydrid, Phthalsäureanhydrid und Acetanhydrid. Hierbei sind Acetanhydrid und Acetylchlorid. besonders bevorzugt.

Neben den hydrolysierbaren Verbindungen der Komponenten a) und b) können auch andere hydrolysierbare Verbindungen (Komponente d) für den Aufbau der anorganischen Matrix eingesetzt werden. Diese werden bevorzugt bei der Bildung der Komponente a) zugegeben. Sie können aber auch zusammen mit den anderen genannten Komponenten b) und c) oder als eigene Komponente in hydrolysierter und/oder kondensierter Form zugegeben werden.

Unter anderen hydrolysierbaren Verbindungen werden dabei im folgenden solche verstanden, bei denen es sich nicht um hydrolysierbares Silan mit mindestens einer Epoxidgruppe oder einer Aminogruppe handelt. Diese anderen Verbindungen enthalten ebenfalls ein anorganisches Element mit daran gebundenen hydrolysierbaren Substituenten.

Es können z.B. eine oder mehrere andere hydrolysierbare Verbindungen zusammen mit dem oder den hydrolysierbaren Silanen mit mindestens einer Epoxidgruppe in der Komponente a) eingesetzt werden, wobei die Menge der anderen hydrolysierbaren Verbindungen 80 Mol-%, und insbesondere 60 Mol-%, bezogen auf die insgesamt eingesetzten hydrolysierbaren Verbindungen, bevorzugt nicht übersteigt.

Als andere hydrolysierbare Verbindungen kommen beispielsweise hydrolysierbare Verbindungen von Elementen in Frage, die aus der dritten und vierten Hauptgruppe (insbesondere B, Al, Ga, Si, Ge und Sn) und der dritten bis fünften Nebengruppe des Periodensystems (insbesondere Ti, Zr, Hf, V, Nb und Ta) ausgewählt sind. Es können jedoch auch andere Metallverbindungen zu vorteilhaften Ergebnissen führen, wie beispielsweise solche von Zn, Mo und W. Besonders bevorzugt handelt es sich um hydrolysierbare Verbindungen von Elementen aus der Gruppe Si, Ti, Zr, Al, B, Sn und V, die mit der bzw. den hydrolysierbaren Silanen gemäß Komponente a) hydrolysiert werden.

Alle diese Verbindungen enthalten hydrolysierbare Gruppen. Als Beispiele kann auf die in Formel (I) aufgeführten Beispiele für X verwiesen werden. Die Verbindungen können auch neben den hydrolysierbaren Gruppen nicht hydrolysierbare Gruppen aufweisen. Dies ist aber außer für Si nicht bevorzugt. Als Beispiele kann auf die nachstehend in Formel (III) aufgeführten Beispiele für R" verwiesen werden. Die einsetzbaren Silane können z. B. die folgende allgemeine Formel (III) haben:

R"ₙSiX₄₋ₙ (III)

worin n = 0, 1, 2 oder 3, bevorzugt 1 oder 2, besonders bevorzugt 1 ist, X gleich oder verschieden sein kann und wie oben für Formel (I) definiert ist. Beispiele für nicht-hydrolysierbare Reste R" sind Alkyl, insbesondere C₁₋₄-Alkyl (wie z.B. Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie z.B. Acetylenyl und Propargyl) und Aryl (insbesondere C₆₋₁₀-Aryl, wie z.B. Phenyl und Naphthyl), wobei die soeben genannten Gruppen gegebenenfalls einen oder mehrere Substituenten, wie z.B. Halogen und Alkoxy, aufweisen können. Diese Reste R" können auch funktionelle Gruppen tragen, die gegebenfalls auch bei der Vernetzung mitwirken können. Beispiele dieser funktionellen Gruppen sind (Meth)acryl-, (Meth)acryloxy-, Cyanat-, Isocyanat-, Hydroxy-, Mercapto-, Sulfan-, Thiocyanat- und Isothiocyanatgruppen. So können z. B. entsprechende Mercaptound Isocyanatsilane eingesetzt werden, die zur Matrixbildung beitragen oder einen Teil der Amin-Epoxid-Netzwerkes durch entsprechende Vernetzung ersetzen.

Konkrete Beispiele für diese anderen hydrolysierbaren Verbindungen sind:
Si(OCH₃)₄, Si(OC₂H₅)₄, Si(O-n- oder i-C₃H₇)₄, Si(OC₄H₉)₄, SiCl₄, HSiCl₃, Si(OOCC₃H)₄, CH₃-SiCl₃, CH₃-Si(OC₂H₅)₃, C₂H₅-SiCl₃, C₂H₅-Si(OC₂H₅)₃, C₃H₇-Si(OCH₃)₃, C₆H₅-Si(OCH₃)₃, C₆H₅-Si(O C₂H₅)₃, (CH₃O)₃-Si-C₃H₆-Cl, (CH₃)₂SiCl₂, (CH₃)₂Si(OCH₃)₂, (CH₃)₂Si(OC₂H₅)₂, (CH₃)₂Si(OH)₂, (C₆H₅)₂SiCl₂, (C₆H₅)₂Si(OCH₃)₂, (C₆H₅)₂Si(OC₂H₅)₂, (i-C₃H₇)₃SiOH, CH₂=CH-Si(OOCCH₃)₃ CH₂=CH-SiCl₃, CH₂=CH-Si(OCH₃)₃, CH₂=CH-Si(OC₂H₅)₃, CH₂=CH-Si(OC₂H₄OCH₃)₃, CH₂=CH-CH₂-Si(OCH₃)₃, CH₂=CH-CH₂-Si(OC₂H₅)₃, CH₂=CH-CH₂-Si(OOCH₃)₃, CH₂=C(CH₃)-COO-C₃H₇-Si(OCH₃)₃, CH₂=C(CH₃)-COO-C₃H₇-Si(OC₂H₅)₃, Al(OCH₃)₃, Al(OC₂H₅)₃, Al(O-n-C₃H₇)₃,Al(O-i-C₃H₇)₃, Al(OC₄H₉)₃, Al(O-i-C₄H₉)₃, Al(O-sek-C₄H₉)₃, AlCl₃, AlCl(OH)₂, Al(OC₂H₄OC₄H₉)₃, TiCl₄, Ti(OC₂H₅)₄, Ti(OC₃H₇)₄,Ti(O-i-C₃H₇)₄, Ti(OC₄H₉₎₄, Ti(2-ethylhexoxy)₄; ZrCl₄, Zr(OC₂H₅)₄, Zr(OC₃H₇)₄, Zr(O-i-C₃H₇)₄, Zr(OC₄H₉)₄, ZrOCl₂, Zr(2-ethylhexoxy)₄, sowie Zr-Verbindungen, die komplexierende Reste aufweisen, wie z.B. β-Diketon und Methacryl-Reste, BCl₃, B(OCH₃)₃, B(OC₂H₅)₃, SnCl₄, SN(OCH₃)₄,Sn(OC₂H₅)₄, VOCl₃ und VO(OCH₃)₃.

Außerdem können zusätzlich oder allein als andere hydrolysierbare Verbindungen beispielsweise hydrolysierbare Siliciumverbindungen mit mindestens einem nicht hydrolysierbaren Rest eingesetzt werden, der Fluoratome, insbesondere 5 bis 30 Fluoratome, an Kohlenstoffatome gebunden aufweist, die vorzugsweise durch mindestens zwei Atome von Si getrennt sind. Als hydrolysierbare Gruppen können dabei z. B. solche eingesetzt werden, wie sie in Formel (I) für X angegeben sind. Die Verwendung eines derartigen fluorierten Silans führt dazu, daß dem entsprechenden Überzug zusätzlich hydrophobe und oleophobe (schmutzabweisende) Eigenschaften verliehen werden. Derartige Silane werden in der DE 4118184 detailliert beschrieben.

Gegebenenfalls können auch nanoskalige anorganische Feststoff-Teilchen in der Beschichtungszusammensetzung enthalten sein. Hierdurch können z. B. die Kratzfestigkeit und die chemische Beständigkeit noch erhöht werden. Die nanoskaligen anorganischen Feststoff-Teilchen können aus beliebigen anorganischen Materialien bestehen, insbesondere bestehen sie jedoch aus Metallen oder Metallverbindungen wie beispielsweise (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃; Chaikogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCl, CuBr, CdI₂ und PbI₂; Carbiden wie CdC₂ oder SiC; Arseniden wie AlAs, GaAs und GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. solchen mit Perowskitstruktur wie BaTiO₃ und PbTiO₃). Es kann eine Art von nanoskaligen anorganischen Feststoff-Teilchen oder eine Mischung verschiedener nanoskaliger anorganischer Feststoff-Teilchen eingesetzt werden.

Bei den nanoskaligen anorganischen Feststoff-Teilchen handelt es sich bevorzugt um ein Oxid, Oxidhydrat, Nitrid oder Carbid von Si, Al, B, Zn, Cd, Ti, Zr, Ce, Sn, In, La, Fe, Cu, Ta, Nb, V, Mo oder W, besonders bevorzugt von Si, Al, B, Ti und Zr. Bevorzugte nanoskalige anorganische Feststoff-Teilchen sind Böhmit, ZrO₂ und TiO₂ sowie Titannitrid.

Die nanoskaligen anorganischen Feststoff-Teilchen besitzen im allgemeinen eine Teilchengröße im Bereich von 1 bis 300 nm oder 1 bis 100 nm, vorzugsweise 2 bis 50 nm und besonders bevorzugt 5 bis 20 nm. Dieses Material kann in Form eines Pulvers eingesetzt werden, wird jedoch vorzugsweise in Form eines (insbesondere sauer stabilisierten) Sols verwendet.

Die nanoskaligen anorganischen Feststoff-Teilchen können, insbesondere wenn auf sehr gute hochkratzfeste Eigenschaften Wert gelegt wird, in einer Menge von bis zu 50 Gew.-%, bezogen auf die Festkomponenten der Beschichtungszusammensetzung, eingesetzt werden. Im allgemeinen liegt der Gehalt an nanoskaligen anorganischen Feststoff-Teilchen im Bereich von 1 bis 40, vorzugsweise 1 bis 30, besonders bevorzugt 1 bis 15 Gew-%.

Es können auch nanoskalige anorganische Feststoff-Teilchen eingesetzt werden, die mit polymerisierbaren und/oder polykondensierbaren organischen Oberflächengruppen versehen sind. Solche polymerisierbaren und/oder polykondensierbaren Nanopartikel und ihre Herstellung sind z.B. in der DE 19746885 beschrieben.

Als weitere Komponente können, vorzugsweise zusammen mit der Komponente a), mindestens ein organisches Monomer, Oligomer oder Polymer mit mindestens zwei Epoxidgruppen oder Mischungen davon enthalten sein. Bei diesen organischen Monomeren, Oligomeren oder Polymeren mit Epoxidgruppen handelt es sich z. B. um aliphatische, cycloaliphatische oder aromatische Verbindungen, um aliphatische, cycloaliphatische oder aromatische Ester oder Ether oder Mischungen davon, z. B. auf Basis von Ethylenglycol, 1,4-Butandiol, Propylenglycol, 1,6-Hexandiol, Cyclohexandimethanol, Pentaerythrit, Bisphenol A, Bisphenol F oder Glycerin, die jeweils mindestens zwei Epoxidgruppe aufweisen. Sie können auch mehr Epoxidgruppen, im Fall von Monomeren oder Oligomeren z. B. 3 oder 4, aufweisen.

Konkrete Beispiele sind 3,4-Epoxycyclohexylmethyl-3,4-epoxycyclohexancarboxylat, Bis-(3,4-epoxycyclohexyl)adipat, Cyclohexandimethanoldiglycidether, Glycerintriglycidether, Neopentylglykoldiglycidether, Pentaerythritpolyglycidether, 2-Ethylhexylglycidether, 1,6-Hexandioldiglycidether, Polypropylenglykoldiglycidether, Epoxidharze auf der Basis von Bisphenol-A, Epoxidharze auf Basis von Bisphenol-F und Epoxidharze auf Basis von Bisphenol-A/F.

Das organische Monomer, Oligomer oder Polymer mit mindestens zwei Epoxidgruppen wird höchstens in einer Menge von 50 Gew.-%, z. B. in einer Menge von 15 bis 30 Gew.-%, bezogen auf die Komponenten a), eingesetzt. Der Einsatz dieser Epoxidgruppen-haltigen Verbindungen ist keine bevorzugte Ausführungsform, sie kann aber zum Beispiel aus preislichen Gründen vorteilhaft sein.

In der Beschichtungszusammensetzung können weitere Additive enthalten sein, die in der Technik üblicherweise je nach Zweck und gewünschten Eigenschaften zugegeben werden. Konkrete Beispiele sind Lösungsmittel, färbende Pigmente, NIR- und/oder IR-reflektierende oder absorbierende Pigmente, Farbstoffe, UV-Absorber, Gleitmittel, wie Tenside, Fluorsilane oder Graphit, oder thermochrome Farbstoffe.

Die als Komponente a) und gegebenenfalls als Komponente b) verwendeten Vorhydrolysate werden durch Hydrolyse der hydrolysierbaren Verbindungen mit Wasser erhalten. Gegebenenfalls kann zur Förderung der Hydrolyse z.B. erwärmt werden oder ein geeigneter pH-Wert eingestellt werden. Dabei werden die hydrolysierbaren Reste der hydrolysierbaren Verbindungen teilweise oder vollständig durch OH-Gruppen ersetzt. Es kann dabei auch zu Kondensationsreaktionen kommen, so daß die Vorhydrolysate auch partielle Kondensationsprodukte enthalten können. Bevorzugt wird die Hydrolyse aber so durchgeführt, daß die Kondensationsreaktion nur langsam fortschreitet, so daß lagerfähige Ausgangskomponenten erhalten werden. Üblicherweise und bevorzugt werden die Komponente a) und b) getrennt voneinander vorhydrolysiert und erst anschließend zusammengegeben. Selbstverständlich können die hydrolysierbaren Verbindungen der Komponenten a) und b) aber auch gemeinsam vorhydrolysiert werden.

Für die Hydrolyse wird bevorzugt eine unterstöchiometrische Wassermenge eingesetzt, d.h. die Menge reicht nicht aus, um alle vorhandenen hydrolysierbaren Gruppen zu hydrolysieren. Es kann z. B. in einem etwa halbstöchiometrischen Verhältnis (Molverhältnis hydrolysierbare Gruppen : H₂O = 1 : 0,6 bis 1 : 0,4) gearbeitet werden.

Nach der Vorhydrolyse und gegebenenfalls stattfindenden teilweisen Kondensation werden dann, sofern sie nicht gemeinsam hydrolysiert werden, die Komponenten a) und b) miteinander vermischt. Das Mischungsverhältnis von Komponente a) zu Komponente b) wird dabei bevorzugt so gewählt, daß das Stoffmengenverhältnis der vorhandenen Epoxidgruppen zu den Aminogruppen 7:1 bis 1:1, besonders bevorzugt 7:2 bis 7:3, beträgt.

Nach Mischung der Komponenten findet eine Kondensation und Vernetzung statt. Gegebenenfalls kann dies durch pH-Einstellung oder Erwärmen unterstützt werden. Unter Kondensation versteht man dabei die Verknüpfung der Silane (oder der anderen Elemente mit hydrolysierbaren Gruppen) über die Kondensation der -OH-Gruppen zu Sauerstoffbrücken, z. B. unter Bildung von Polysiloxanen (anorganische Kondensation). Der Kondensationsgrad des sich bildenden Polykondensats beträgt vorzugsweise 50 bis 90%, besonders bevorzugt 60 bis 80 %, insbesondere 60 bis 70%. Die Steuerung des Kondensationsgrades ist dem Fachmann bekannt, sie kann z.B. durch die Menge an Wasser für die Hydrolyse erfolgen. Unter dem Kondensationsgrad versteht man hier den prozentualen Anteil an kondensierten hydrolysierten bzw. hydrolysierbaren Gruppen, bezogen auf die eingesetzten hydrolysierten bzw. hydrolysierbaren Gruppen im nicht kondensierten Zustand.

Weiter findet eine Vernetzung zwischen den Epoxid- und Aminogruppen statt (organische Vernetzung). Im Laufe der Zeit nehmen der Vernetzungsgrad und der Kondensationsgrad zu. Zu einem bestimmten Zeitpunkt wird dann das Aminoschutzgruppen-Reagenz zugegeben. Wegen seiner größeren Reaktivität mit den Aminogruppen reagiert es mit diesen unter Bildung von Aminderivaten, die keiner Vemetzungsreaktion zugänglich sind, so daß ein Abbruch der Vernetzung stattfindet.

Das Aminoschutzgruppen-Reagenz wird in einer ausreichenden Menge zugegeben, um die noch nicht vemetzten Aminogruppen zu derivatisieren und damit die Vemetzungsreaktion zu stoppen. Der Zeitpunkt der Zugabe wird so gewählt, daß der Vemetzungsgrad des resultierenden Polykondensats, ausgedrückt als prozentualer Anteil der vemetzten Amino- und Epoxidgruppen, bezogen auf eingesetzte Amino- und Epoxidgruppen im unvemetzten Zustand, 5 bis 50%, bevorzugt 10 bis 50 %, insbesondere 20 bis 40 % beträgt. Gewöhnlich erfolgt die Zugabe des Aminoschutzgruppen-Reagenzes einige Minuten bis einige Stunden nach Zusammengabe der Komponenten a) und b). Der pH-Wert kann bei der Zugabe des Aminoschutzgruppen-Reagenz aufgrund dessen Acidität absinken.

Die Bestimmung der Kondensations- bzw. Vemetzungsgrade ist dem Fachmann bekannt. Die Ermittlung der im Polykondensat vorliegenden Konzentrationen der relevanten Komponenten und damit der Vemetzungs- und Kondensationsgrade kann z. B. durch NMR-Messung nach Eichung mit den Ausgangssubstanzen erfolgen. Dadurch ist eine Kontrolle des zeitlichen Verlaufs der Vemetzungs- und Kondensationsgrade möglich.

Zwecks Einstellung der rheologischen Eigenschaften der Zusammensetzungen können diesen gegebenenfalls inerte Lösungsmittel auf irgendeiner Stufe der Herstellung zugesetzt werden. Vorzugsweise handelt es sich bei diesen Lösungsmitteln um bei Raumtemperatur flüssige Alkohole und/oder Alkoholether, z. B. C₁-C₈-Alkohole, die im übrigen auch bei der Hydrolyse der bevorzugt eingesetzten Alkoxide der betreffenden Elemente entstehen, oder Monoether von Diolen wie Ethylenglycol oder Propylenglycol mit C₁-C₈-Alkoholen.

Nach der Zugabe des Aminoschutzgruppen-Reagenzes wird bevorzugt ein Polykondensat mit einem Vemetzungsgrad von 5 bis 50% erhalten, das bevorzugt auch einen Kondensationsgrad von 50 bis 90 % aufweist. Dieses Polykondensat kann gegebenenfalls mit weiteren üblichen Additiven als Beschichtungszusammensetzung eingesetzt werden.

Bei dem zu beschichtenden Substrat kann es sich z. B. um ein Substrat aus Glas, Keramik, Glaskeramik, Kunststoff, Metall oder Holz handeln. Bevorzugt handelt es sich um ein Substrat aus Glas, Keramik oder Glaskeramik. Besondere Vorteile werden erfindungsgemäß mit Glassubstraten erzielt, z.B. Flach- oder Hohlglas. Praktische Anwendungsbeispiele sind leichte Einwegflaschen aus Hohlglas, Dünnglas (d≤1 mm) für Displays, Solarzellen und -kollektoren.

Das Substrat kann vorbehandelt sein. Gegebenenfalls ist das Substrat bereits mit üblichen Grundierungen oder Beschichtungen versehen.

Die erfindungsgemäße Beschichtungszusammensetzung wird nach aus dem Stand der Technik bekannten Verfahren auf das Substrat aufgetragen. Der Auftrag kann durch Standard-Beschichtungsverfahren, wie z.B. Tauchen, Streichen, Bürsten, Rakeln, Walzen, Sprühen oder Schleudern, erfolgen. In einer bevorzugten Ausführungsform wird das Substrat, insbesondere Glas, vor dem Auftrag erwärmt, z.B. auf 80°C. Gegebenenfalls nach vorheriger Antrocknung bei Raumtemperatur (teilweise Entfernung der vorhandenen Lösungsmittel) wird dann thermisch behandelt bzw. verdichtet, z. B. bei Temperaturen von 80°C - 150°C, bevorzugt bei 100°C - 130°C, besonders bevorzugt bei etwa 120°C.

Die Schichtdicke der auf das Substrat aufgetragenen und wärmebehandeften Beschichtungszusammensetzung kann z.B. 15 bis 45 µm, bevorzugt 25 bis 40 µm und insbesondere 30 bis 35 µm, betragen.

Die Beschichtungen können, falls gewünscht, hohe Transparenz aufweisen und zeichnen sich daneben auch durch eine hohe Kratzfestigkeit auf. Insbesondere wird ein zum Festigkeitserhalt ausreichendes hart-elastisches Verhalten der daraus hergestellten Beschichtung erzielt, so daß eine Erhöhung der (Bruch)festigkeit auch nach Beanspruchung erhalten bleibt.

Die folgenden Beispiele sollen die vorliegende Erfindung weiter erläutern, ohne deren Umfang jedoch zu beschränken.

### Beispiel 1

### Festigkeitserhaltende Beschichtung auf Floatglas der Dicke 2 mm (Sol 4)

### Synthese und Schichtauftrag des Beschichtungssols

In einem Dreihals-Rundkolben mit Rückflußkühler und Tropftrichter wurden 450 g 3-Glycidyloxypropyltrimethoxysilan (GPTS) mit 51,4 g dest. Wasser versetzt und 24 h unter Rückfluß zum Sieden erhitzt (Molverhältnis -OR : H₂O = 1 : 0,5). Zu 388 g Aminopropyltriethoxysilan (APTES) werden bei Raumtemperatur und unter starkem Rühren 49 g Wasser zugegeben (Molverhältnis -OR : H₂O = 1 : 0,5). Zu 185 g des GPTS-Vorhydrolysats wurden unter Rühren 50 ml Isopropanol sowie 50 g des APTES-Vorhydrolysats gegeben. Nach 20 minütiger Rührzeit wurden zu diesem Sol noch 4,7 ml Acetanhydrid zugegeben. Die Beschichtung der Floatgläser (100 mm x 100 mm x 2 mm) erfolgte durch Tauchbeschichtung. Die Schichtverdichtung erfolgte im Trockenschrank bei 120 °C für 10 min. Nach dieser Beschichtung wurden die Floatgläser mit Hilfe einer Sandrieselanlage (in Anlehnung an DIN 52 348) mit 500 g Korund der Körnung P 30 geschädigt. Die Bruchfestigkeit der beschichteten und geschädigten Gläser wurde anschließend in einem Doppelringbiegeversuch ermittelt. Die Auswertung erfolgte durch Verwendung der Weibull-Statistik. Die festigkeitserhaltende Wirkung wurde gegenüber unbeschichteten und geschädigten Gläsern geprüft. Die geschädigten und ungeschädigten Gläser wurden anhand von sogenannten Weibull-Plots untersucht.

Man erkennt, daß die Bruchfestigkeit des unbeschichteten Flachglases stark beeinträchtigt wird, z. B. ergibt sich eine Verringerung von 628 MPa (566-698 MPa) auf 57 MPa (55-59 MPa), während die Festigkeit des Glases mit der erfindungsgemäßen Beschichtung auf dem hohen Niveau bleibt.

### Beispiel 2:

### Festigkeitserhattende Beschichtung auf Hohlglas

Die Synthese des Beschichtungssols erfolgte analog zu Beispiel 1. Der Schichtauftrag auf die untersuchten 1 I Softdrinkflaschen erfolgte ebenfalls über Tauchbeschichtung. Die Bruchfestigkeit der Flaschen wurde mit Hilfe eines Berstdruckgerätes ermittelt. Um eine praxisnahe Schädigung zu simulieren, wurden die Flaschen mit Hilfe eines Liniensimulators mit unterschiedlichen Zeiten (5 min, 7 min und 15 min) und Bedingungen (trocken, naß) geschädigt. Im Anschluß an diese Schädigung wurde die Berstdruckfestigkeit bestimmt.

Es zeigte sich, daß die Berstdruckfestigkeit der Flaschen durch die Beschichtung um 35 % erhöht wird und auch nach 15 minütiger Liniensimufation (trocken) auf diesem hohen Niveau erhalten bleibt, während die Berstdruckfestigkeit unbeschichteter Flaschen bereits nach 5 minütiger Liniensimulation auf etwa 55 % des Ausgangswertes gesunken ist. Analoges gilt für die nasse Liniensimulation (Tropfwasser).

## Patentansprüche

1. Beschichtungszusammensetzung, umfassend ein Polykondensat, das erhältlich ist durch Umsetzen von
a) einem Vorhydrolysat auf Basis von mindestens einem hydrolysierbaren Silan mit mindestens einem nicht hydrolysierbaren Substituenten, wobei das Silan an mindestens einem nicht hydrolysierbaren Substituenten eine oder mehrere Epoxidgruppen aufweist;
b) mindestens einer Aminkomponente, ausgewählt aus (1) Vorhydrolysaten auf Basis von mindestens einem hydrolysierbaren Silan mit mindestens einem nicht hydrolysierbaren Substituenten, wobei das Silan an mindestens einem nicht hydrolysierbaren Substituenten eine oder mehrere Aminogruppen aufweist und (2) Aminverbindungen mit mindestens zwei Aminogruppen, und
c) einem Aminoschutzgruppen-Reagenz.

2. Beschichtungszusammensetzung nach Anspruch 1, **dadurch gekennzeichnet, daß** der Vemetzungsgrad des Polykondensats, ausgedrückt als prozentualer Anteil an vemetzten Amino- und Epoxidgruppen, bezogen auf eingesetzte Amino- und Epoxidgruppen im unvemetzten Zustand, 5 bis 50% beträgt.

3. Beschichtungszusammensetzung nach Anspruch 1 oder 2, **dadurch gekennzeichnet, daß** das Polykondensat einen Kondensationsgrad von 50 bis 90% aufweist.

4. Beschichtungszusammensetzung nach einem der Ansprüche 1 bis 3, **dadurch gekennzeichnet, daß** das Stoffmengenverhältnis der Epoxidgruppen zu den Aminogruppen 7:1 bis 1:1 beträgt.

5. Beschichtungszusammensetzung nach einem der Ansprüche 1 bis 4, **dadurch gekennzeichnet, daß** das hydrolysierbare Silan mit Epoxidgruppe der Komponente a) eine Verbindung der allgemeinen Formel (I) ist:
X₃SiR (I)
in welcher die Reste X, gleich oder verschieden voneinander, für eine hydrolysierbare Gruppe stehen und R einen Glycidyloxy-(C₁-C₆)-alkylen-Rest darstellt.

6. Beschichtungszusammensetzung nach einem der Ansprüche 1 bis 5, **dadurch gekennzeichnet, daß** die Komponente b) auf einem hydrolysierbaren Silan mit Aminogruppe der allgemeinen Formel (II) basiert:
X₃SiR' (II)
worin die Reste X, gleich oder verschieden voneinander, für eine hydrolysierbare Gruppe stehen und R' für einen nicht hydrolysierbaren Rest steht, der mindestens eine primäre oder sekundäre Aminogruppe umfaßt.

7. Beschichtungszusammensetzung nach Anspruch 5 oder 6, **dadurch gekennzeichnet, daß** das hydrolysierbare Silan mit Epoxidgruppe der Komponente a) Glycidyloxypropyltrimethoxysilan und/oder Glycidyloxypropyltriethoxysilan ist und die Komponente b) auf Aminopropyltriethoxysilan und/oder Aminopropyltrimethoxysilan basiert.

8. Beschichtungszusammensetzung nach einem der Ansprüche 1 bis 7, **dadurch gekennzeichnet, daß** zusätzlich ein organisches Monomer, Oligomer oder Polymer mit mindestens zwei Epoxidgruppen eingesetzt worden ist.

9. Beschichtungszusammensetzung nach irgendeinem der Ansprüche 1 bis 8, **dadurch gekennzeichnet, daß** zur Herstellung des Polykondensats zusätzlich ein oder mehrere andere hydrolysierbare Verbindungen von Elementen aus der Gruppe Si, Ti, Zr, Al, B, Sn und V eingesetzt worden sind.

10. Beschichtungszusammensetzung nach irgendeinem der Ansprüche 1 bis 9, **dadurch gekennzeichnet, daß** das Aminoschutzgruppen-Reagenz ein Säureanhydrid und/oder ein Säurehalogenid ist.

11. Beschichtungszusammensetzung nach irgendeinem der Ansprüche 1 bis 10, **dadurch gekennzeichnet, daß** sie zusätzlich ein Additiv aus der Gruppe der färbenden Pigmente, NIR- und/oder IR-refleküerenden oder absorbierenden Pigmente, Farbstoffe, UV-Absorber, Gleitmittel, nanoskaligen anorganischen Feststoff-Teilchen oder thermochromen Farbstoffe enthält.

12. Verfahren zur Herstellung einer Beschichtungszusammensetzung durch Umsetzen von
a) einem Vorhydrolysat auf Basis von mindestens einem hydrolysierbaren Silan mit mindestens einem nicht hydrolysierbaren Substituenten, wobei das Silan an mindestens einem nicht hydrolysierbaren Substituenten eine oder mehrere Epoxidgruppen aufweist;
b) mindestens einer Aminkomponente, ausgewählt aus (1) Vorhydrolysaten auf Basis von mindestens einem hydrolysierbaren Silan mit mindestens einem nicht hydrolysierbaren Substituenten, wobei das Silan an mindestens einem nicht hydrolysierbaren Substituenten eine oder mehrere Aminogruppen aufweist und (2) Aminverbindungen mit mindestens zwei Aminogruppen, und
c) einem Aminoschutzgruppen-Reagenz,
wobei man die Komponente a) mit der Komponente b) mischt und anschließend das Aminoschutzgruppen-Reagenz zugibt und den Zeitpunkt der Zugabe so wählt, daß der Vemetzungsgrad des resultierenden Polykondensats, ausgedrückt als prozentualer Anteil der vemetzten Aminound Epoxidgruppen, bezogen auf eingesetzte Amino- und Epoxidgruppen im unvemetzten Zustand, 5 bis 50% beträgt.

13. Verwendung der Beschichtungszusammensetzung nach einem der Ansprüche 1 bis 11 zur Beschichtung von Glas, Glaskeramik, Keramik oder Kunststoff.

14. Beschichtetes Substrat, **gekennzeichnet durch** eine auf das Substrat aufgebrachte Beschichtungszusammensetzung nach einem der Ansprüche 1 bis 11.

15. Beschichtetes Substrat nach Anspruch 14, **dadurch gekennzeichnet, daß** das Substrat Glas ist, insbesondere Flachglas oder Hohlglas.

16. Beschichtetes Substrat nach Anspruch 14 oder 15, **dadurch gekennzeichnet, daß** die Schichtdicke der Beschichtung im Bereich von 15 µm bis 45 µm liegt.

## Claims

1. Coating composition comprising a polycondensate obtainable by reacting
a) a prehydrolysate based on at least one hydrolysable silane having at least one nonhydrolysable substituent, the silane containing one or more epoxide groups on at least one non-hydrolysable substituent;
b) at least one amine component selected from (1) prehydrolysates based on at least one hydrolysable silane having at least one nonhydrolysable substituent, the silane containing one or more amino groups on at least one nonhydrolysable substituent, and (2) amine compounds containing at least two amino groups, and
c) an amino protective group reagent.

2. Coating composition according to Claim 1, **characterized in that** the degree of crosslinking of the polycondensate, expressed as the percentage fraction of crosslinked amino groups and epoxide groups relative to amino groups and epoxide groups in the uncrosslinked state, is from 5 to 50%.

3. Coating composition according to Claim 1 or 2, **characterized in that** the polycondensate has a degree of condensation of from 50 to 90%.

4. Coating composition according to any of Claims 1 to 3, **characterized in that** the molar ratio of the epoxide groups to the amino groups is from 7:1 to 1:1.

5. Coating composition according to any of Claims 1 to 4, **characterized in that** the hydrolysable silane containing epoxide group of component a) is a compound of the general formula (I):
X₃SiR (I)
in which the radicals X, the same as or different from one another, stand for a hydrolysable group and R is a glycidyloxy-(C₁-C₆)-alkylene radical.

6. Coating composition according to any of Claims 1 to 5, **characterized in that** component b) is based on a hydrolysable silane containing amino group, of the general formula (II):
X₃SiR' (II)
in which the radicals X, the same as or different from one another, stand for a hydrolysable group and R' stands for a nonhydrolysable radical which contains at least one primary or secondary amino group.

7. Coating composition according to Claim 5 or 6, **characterized in that** the hydrolysable silane containing epoxide group of component a) is glycidyloxypropyltrimethoxysilane and/or glycidyloxypropyltriethoxysilane and component b) is based on aminopropyltriethoxysilane and/or aminopropyltrimethoxysilane.

8. Coating composition according to any of Claims 1 to 7, **characterized in that** additionally an organic monomer, oligomer or polymer containing at least two epoxide groups has been used.

9. Coating composition according to any of Claims 1 to 8, **characterized in that** the polycondensate has been prepared using additionally one or more other hydrolysable compounds of elements from the group Si, Ti, Zr, Al, B, Sn and V.

10. Coating composition according to any of Claims 1 to 9, **characterized in that** the amino protective group reagent is an acid anhydride and/or acid halide.

11. Coating composition according to any of Claims 1 to 10, **characterized in that** it further comprises an additive from the group consisting of colour pigments, NIR and/or IR reflecting or absorbing pigments, dyes, UV absorbers, lubricants, nanoscale inorganic particulate solids and thermochromic dyes.

12. Process for preparing a coating composition by reacting
a) a prehydrolysate based on at least one hydrolysable silane having at least one nonhydrolysable substituent, the silane containing one or more epoxide groups on at least one non-hydrolysable substituent;
b) at least one amine component selected from (1) prehydrolysates based on at least one hydrolysable silane having at least one nonhydrolysable substituent, the silane containing one or more amino groups on at least one nonhydrolysable substituent, and (2) amine compounds containing at least two amino groups, and
c) an amino protective group reagent,
which involves mixing component a) with component b) and then adding the amino protective group reagent and choosing the time of the addition such that the degree of crosslinking of the resulting polycondensate, expressed as the percentage fraction of the crosslinked amino and epoxide groups relative to amino and epoxide groups in the uncrosslinked state, is from 5 to 50%.

13. Use of the coating composition according to any of Claims 1 to 11 for coating glass, glass ceramic, ceramic or plastic.

14. Coated substrate **characterized by** a coating composition according to any of Claims 1 to 11 applied to the substrate.

15. Coated substrate according to Claim 14, **characterized in that** the substrate is glass, especially flat glass or hollow glassware.

16. Coated substrate according to Claim 14 or 15, **characterized in that** the thickness of the coating is in the range from 15 µm to 45 µm.

## Revendications

1. Composition de revêtement comprenant un polycondensat qui peut être obtenu par réaction de :
a) un préhydrolysat à base d'au moins un silane hydrolysable ayant au moins un substituant non-hydrolysable, ledit silane présentant un ou plusieurs groupes époxyde sur au moins un substituant non-hydrolysable,
b) au moins un constituant aminé, choisi parmi (1) les préhydrolysats à base d'au moins un silane hydrolysable ayant au moins un substituant non-hydrolysable, ledit silane présentant un ou plusieurs groupes amino sur au moins un substituant non-hydrolysable, et (2) les composés aminés ayant au moins deux groupes amino, et
c) un réactif formant des groupes protecteurs du groupe amino.

2. Composition de revêtement selon la revendication 1, **caractérisée en ce que** le degré de réticulation du polycondensat, exprimé par le pourcentage de groupes amino et de groupes époxyde réticulés, rapporté aux groupes amino et époxyde mis en oeuvre, à l'état non-réticulé, atteint 5 à 50 %.

3. Composition de revêtement selon la revendication 1 ou 2, **caractérisée en ce que** le polycondensat présente un degré de condensation de 50 à 90 %.

4. Composition de revêtement selon l'une quelconque des revendications 1 à 3, **caractérisée en ce que** le rapport de la quantité des groupes époxyde à la quantité des groupes amino est de 7 :1 à 1 :1.

5. Composition de revêtement selon l'une quelconque des revendications 1 à 4, **caractérisée en ce que** le silane hydrolysable à groupes époxyde du constituant a) est un composé de formule générale (I) :
X₃SiR (I)
dans laquelle les restes X sont identiques ou différents et représentent chacun un groupe hydrolysable, et R représente un groupe glycidyloxyalkyle(C₁-C₆).

6. Composition de revêtement selon l'une quelconque des revendications 1 à 5, **caractérisée en ce que** le constituant b) est à base d'un silane hydrolysable à groupes amino de formule générale (II) :
X₃SiR' (II)
dans laquelle les restes X sont identiques ou différents et représentent chacun un groupe hydrolysable, et R' représente un groupe non-hydrolysable, qui renferme au moins un groupe amino primaire ou secondaire.

7. Composition de revêtement selon la revendication 5 ou 6, **caractérisée en ce que** le silane hydrolysable à groupes époxyde du constituant a) est le glycidyloxypropyltriméthoxysilane et/ou le glycidyloxypropyltriéthoxysilane, et le constituant b) est à base d'aminopropyltriéthoxysilane et/ou d'aminopropyltriméthoxysilane.

8. Composition de revêtement selon l'une quelconque des revendications 1 à 7, **caractérisée en ce qu'**on a utilisé en plus un monomère, oligomère ou polymère organique, ayant au moins deux groupes époxyde.

9. Composition de revêtement selon l'une quelconque des revendications 1 à 8, **caractérisée en ce que** l'on a utilisé en plus pour la préparation du polycondensat, un ou plusieurs autres dérivés hydrolysables d'éléments pris parmi Si, Ti, Zr, Al, B, Sn et V.

10. Composition de revêtement selon l'une quelconque des revendications 1 à 9, **caractérisée en ce que** le réactif formant des groupes protecteurs du groupe amino est un anhydride d'acide et/ou un halogénure d'acide.

11. Composition de revêtement selon l'une quelconque des revendications 1 à 10, **caractérisée en ce qu'**elle contient en plus un additif pris parmi les pigments colorant, les pigments absorbant ou réfléchissant les rayons infrarouges et/ou les rayons du proche infrarouge, les colorants, les agents absorbant les rayons UV, les lubrifiants, les particules solides minérales de l'ordre de grandeur du nanomètre, et les colorants thermochromes.

12. Procédé de préparation d'une composition de revêtement par réaction de :
a) un préhydrolysat à base d'au moins un silane hydrolysable ayant au moins un substituant non-hydrolysable, ledit silane présentant un ou plusieurs groupes époxyde sur au moins un substituant non-hydrolysable,
b) au moins un constituant aminé, pris parmi (1) les préhydrolysats à base d'au moins un silane hydrolysable ayant au moins un substituant non-hydrolysable, ledit silane présentant un ou plusieurs groupes amino sur au moins un substituant non-hydrolysable, et (2) les composés aminés ayant au moins deux groupes amino, et
c) un réactif formant des groupes protecteurs du groupe amino,
procédé dans lequel on mélange le constituant a) avec le constituant b) et on ajoute ensuite le réactif formant des groupes protecteurs du groupe amino, et on choisit le moment de l'addition de telle manière que le degré de réticulation du polycondensat résultant, exprimé par le pourcentage des groupes amino et des groupes époxyde réticulés, rapporté aux groupes amino et époxyde mis en oeuvre, à l'état non-réticulé, atteigne 5 à 50 %.

13. Utilisation de la composition de revêtement selon l'une quelconque des revendications 1 à 11, pour le revêtement du verre, de la céramique vitrifiée, de la céramique ou des matières plastiques.

14. Support revêtu, **caractérisé en ce qu'**une composition de revêtement selon l'une quelconque des revendications 1 à 11 a été appliquée sur le support.

15. Support revêtu selon la revendication 14, **caractérisé en ce que** le support est du verre, en particulier du verre plat ou du verre à bouteilles.

16. Support revêtu selon la revendication 14 ou 15, **caractérisé en ce que** l'épaisseur de la couche de revêtement est située dans la domaine allant de 15 µm à 45 µm.
